# EUROPEAN PATENT APPLICATION

(11) **EP 1 237 382 A2**
(43) Date of publication of application: **04.09.2002**
(21) Application number: 02100199.5
(22) Date of filing: 28.02.2002
(51) Int. Cl.: H04Q 7/28

(54) **Shared communications channel access in an overlapping coverage environment**

(30) Priority: 28.02.2001 US 272219; 28.09.2001 US 966393
(71) Applicant: Texas Instruments Incorporated, Dallas, Texas 75251 (US)
(72) Inventor: Ho, Jin-Meng, Plano, TX 75025 (US); Shaver, Donald P., Dallas, TX 75248 (US); Schrum, Sid B., Durham, NC 75248 (US)
(74) Representative: Holt, Michael

(57) **Abstract**

Methods for creating contention-free bursts of communications in an environment wherein a communications channel may be shared by a plurality of wireless networks. The methods presented also include mechanisms for recovery due to collisions and otherwise lost transmissions and for ensuring that a single wireless network is not able to obtain access of the communications channel at the expense of other wireless networks.

## Description

### TECHNICAL FIELD OF THE INVENTION

The present invention relates generally to wireless communications, and more particularly, to spectrum sharing in wireless information networks with multiple overlapping coverage areas.

### BACKGROUND OF THE INVENTION

Communications networks use a communications medium to transmit information in the form of computer data, voice, music, video, etc., between users or between users and service providers. The communications medium may be a wire link, a fiber optic link, or a wireless link. The wireless link may include, but is not limited to, radio frequency, infrared, laser light, and microwave. The network may, in fact, use a combination of different communications links. With the exception of a small number of networks that use dedicated communications links between each user, most information networks use a shared communications medium to carry the transmitted information. Examples of information networks using a shared communications medium include: Ethernet, token ring, and wireless Ethernet (IEEE 802.11).

Sharing of the transmission medium is more problematic with wireless networks than with wired networks since there is no "containment" of the transmitted information. When information is transmitted over-the-air, it is broadcast all over the network (and beyond), often ending up in places where the user did not intend for it to be. This is different from the case of a wired transmission medium where the medium physically contains the information.

The fact that wireless transmissions permeate the immediate vicinity with their transmissions makes it difficult to design networks with overlapping coverage areas. Multiple wireless networks operating in adjacent geographical areas but operating on the same frequency band will tend to interfere with each other and as a result of the interference, have a corresponding decrease in network performance.

One solution for providing overlapping coverage is to force adjacent networks to operate at different frequency bands. This is sometimes referred to as frequency planning. An example of a network using frequency planning can be seen in cellular telephone networks. In cellular telephone networks, if one cell is set to operate in a particular frequency band, adjacent cells do not use that frequency band. Frequency planning is adequate for low bandwidth applications such as voice telephony, but for applications requiring high bandwidth, such as high-speed data networks, frequency planning is inadequate because it places severe bandwidth constraints on the networks, due to the fact that overall bandwidth available to each network is only a fraction of the total available bandwidth. Additionally, there may not be sufficient available spectrum to allocate a separate frequency band for each network to have its own frequency band.

Another solution for mitigating the problem of overlapping coverage areas and interference resulting from overlapping coverage is to force networks to transmit at a lower signal power. By transmitting at a lower signal power, the signals propagate less (reducing the effective size of the network) and therefore the overlap is reduced or even eliminated. However, by reducing transmitted signal power, the network's effective range is reduced along with network data rates. Additionally, by reducing the size of the networks, more networks are required to provide an equivalent amount of coverage.

A need has therefore arisen for a methodology for providing transmissions in a wireless information network with overlapped coverage from other wireless information networks that does not place severe restrictions on available network bandwidth.

### SUMMARY OF THE INVENTION

In one aspect, the present invention provides a method for initiating contention-free bursts in a network with a shared communications medium by determining the status of the shared medium and waiting a specified period of time, where the specified period of time is based on the status of the medium, and transmitting to initiate the contention-free burst after waiting the requisite period of time.

In another aspect, the present invention provides an access recovery method when collisions occur during a contention-free burst by first initiating a contention-free burst and then waiting for an expected response from the destination. If the expected response is not detected, then the status of the shared medium is detected and a wait based on the status of the shared medium is performed. After the waiting is complete, regaining control of the shared medium.

A preferred embodiment of the present invention has a principal advantage in that it allows for contention in a shared communications channel between multiple networks such that the multiple networks share the available network bandwidth fairly without incurring an appreciable drop in network performance or a large amount of computational overhead.

A preferred embodiment of the present invention has an additional advantage in that it minimizes the amount of network bandwidth wasted when the multiple networks are contending for the same-shared communications channel.

A preferred embodiment of the present invention has yet another advantage in that it allows for a smaller waiting period when contention for the shared communications channel is from within a single network, hence reducing medium idle time.

### BRIEF DESCRIPTION OF THE DRAWINGS

The above features of the present invention will be more clearly understood from consideration of the following descriptions in connection with accompanying drawings in which:
Figure 1 is a diagram displaying a typical (prior art) configuration of a wireless local area network;
Figure 2 is a diagram displaying a group of wireless local area networks operating in adjacent geographical areas;
Figure 3 is a diagram displaying three collocated IEEE 802.11 wireless local area networks with overlapping coverage areas;
Figure 4 is a flow diagram displaying an algorithm for starting a contention-free burst in a shared communications channel in an environment where multiple wireless local area networks have overlapping coverage areas according to a preferred embodiment of the present invention;
Figures 5a-c are timing diagrams displaying transmissions on a shared communications channel according to a preferred embodiment of the present invention;
Figures 6a-b are timing diagrams displaying transmissions on a shared communications channel by a hybrid coordinator after not detecting an expected response transmission, but finding the shared channel busy according to a preferred embodiment of the present invention;
Figure 7 is a timing diagram displaying a transmission on a shared communications channel by a hybrid coordinator after not detecting an expected response transmission, but finding the shared channel idle according to a preferred embodiment of the present invention; and
Figure 8 is a timing diagram displaying a transmission on a shared communications channel by a wireless station after not detecting an expected response transmission according to a preferred embodiment of the present invention.

### DETAILED DESCRIPTION OF ILLUSTRATIVE EMBODIMENTS

The making and use of the various embodiments are discussed below in detail. However, it should be appreciated that the present invention provides many applicable inventive concepts which can be embodied in a wide variety of specific contexts. The specific embodiments discussed are merely illustrative of specific ways to make and use the invention, and do not limit the scope of the invention.

Sharing a communications medium is a necessity for a majority of the communications networks (networks) available today. Only in a small number of networks are there enough resources to permit dedicating communications media between pairs of users. For most purposes, dedicating a connection between pairs of users is an inefficient use of bandwidth resources. Sharing a communications medium between multiple users allow for more efficient use of the medium, because when one user may be idle, another user may have data to transmit. Sharing is also more cost efficient because a smaller amount of the media is needed to support the information network. Note that this is also true of wireless, over-the-air networks, where if sharing were not used, then more "air", i.e., spectrum, must be dedicated to supporting the network.

In the case of wireless, over-the-air information networks, the fact that signals transmitted over-the-air also propagate to places other than their intended destination presents a problem when there are multiple networks operating in adjacent geographical areas but sharing a same frequency band. In wired networks, the transmitted signals are confined to the wire. Even if two wired networks are adjacent to each other, a signal transmitted over one wire does not appear on the other wire unless the two wires are physically connected (the signal on one wire may appear on the other wire due to noise processes such as crosstalk, but are generally much smaller in magnitude than the actual signal and, for the most part, can generally be ignored).

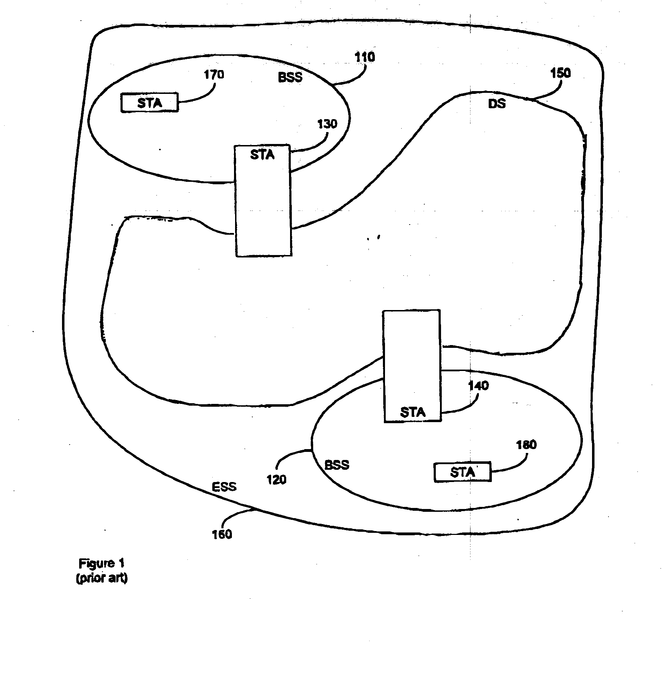

Referring now to Figure 1, a diagram (prior art) of a typical wireless local area network (LAN) installation according to the IEEE 802.11 technical standard, "ANSI/IEEE Std 802.11, 1999 Edition; Information technology - Telecommunications and information exchange between systems - Local and metropolitan area networks - Specific requirements. Part 11: Wireless LAN Medium Access Control (MAC) and Physical Layer (PHY) Specifications", which is incorporated herein by reference. Figure 1 provides an illustration of the basic building blocks of an IEEE 802.11 network.

Figure 1 displays a first basic service set (BSS) 110 and a second BSS 120. A BSS is the basic building block of an IEEE 802.11 network and can be thought of as a coverage area within which member stations may participate in direct communications. A BSS is started, formed, and maintained by an access point (AP). BSS 110 corresponds to AP 130 and BSS 120 corresponds to AP 140. An AP is a station that is connected to a distribution system (DS) 150. A DS allows multiple BSSs to interconnect with one another and form an extended service set (ESS) 160. The medium used in a DS may be the same as the medium used in the BSSs or it may be different, e.g., the medium used in the BSSs may be wireless radio frequency (RF) while a DS may use fiber optic. Internal to BSS 110 is an AP 130 and a wireless station (STA) 170 while internal to BSS 120 is an AP 140 and a STA 180. A BSS may contain more than two stations (e.g., a maximum of about 20 stations per BSS is typical today), but it will have one AP.

As shown in Figure 1, BSS 110 is connected to DS 150 via the access point 130 and the second access point 140 connects DS 150 to BSS 120. It should be noted that an access point also contains a wireless station and can be addressed like any other wireless station.

A user may be thought of as a device or an entity that uses a station to communicate with other users who are using other stations to communicate. Therefore, in the remainder of this discussion, the terms stations and users will be used interchangeably without loss of information.

In an IEEE 802.11 wireless LAN, data, management, and control traffic are transmitted in what are called "units." Data and control traffic transmitted between two stations are called Medium Access Control (MAC) protocol data units (MPDU), while management traffic transmitted between two stations are called MAC management protocol data units (MMPDU). A unit may be fragmented if it is too large to fit within a single MAC frame or within an allocated time interval and therefore may be fragmented into multiple MAC frames.

Timing is a crucial aspect of an IEEE 802.11 wireless LAN. Spans of time are used to prevent or allow certain types of communications. Other spans of time are used to begin and end communications. The most commonly referred time spans are SIFS, PIFS, and DIFS. A SIFS is a short inter-frame space and is typically the smallest time span in the LAN. A PIFS is a point coordinating function (PCF) inter-frame space. A PIFS is equal to one SIFS plus one slot time. A DIFS is a distributed coordinating function (DCF) inter-frame space. A DIFS is equal to one PIFS plus one slot time. A slot time is the maximum amount of time for a station to sense a frame, due to signal processing delay and propagation delay that is transmitted from any other station within the same BSS.

According to the IEEE 802.11 technical standard, an 11 mega-bits per second (Mbps) variant, referred to as IEEE 802.11b, has three non-overlapping communications channels over which stations are permitted to transmit and receive information. With only three communications channels, a maximum of three BSSs can be located in adjacent geographical areas and communicate freely without interfering with one another. If more than three BSSs are operating in adjacent geographical areas, then communications channel sharing must take place.

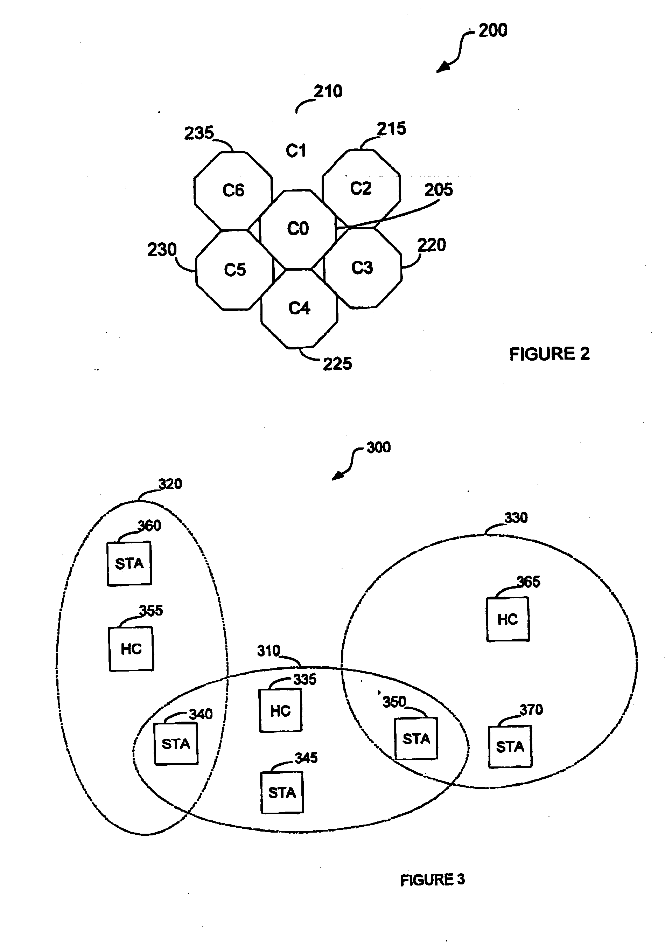

Referring now to Figure 2, a diagram illustrates a coverage area map 200 of several BSSs. The coverage area map 200 displays seven adjacent BSSs and their respective coverage areas. A BSS 205 in the center of Figure 2 is surrounded by six other BSSs (210, 215, 220, 225, 230, and 235). Since the seven BSSs displayed in the coverage area map 200 are adjacent to each other, in order to have interference free communications, each BSS must use a different communications channel. Therefore, the seven BSSs require seven different communications channels. Hence, according to the IEEE 802.11b technical standard, there is an insufficient number of communications channels to allow for interference-free communications in a densely populated concentration of BSSs. In such a situation, multiple BSSs must share the limited number of communications channels. According to the IEEE 802.11 technical standard, no mechanism is in place to allow the sharing of a communications channel between multiple BSSs. Accordingly, existing mechanisms for sharing the communications channel between different stations within a single BSS are used.

When a station or a central controller (also called a hybrid coordinator in IEEE 802.11e, yet another IEEE 802.11 technical standard) wishes to transmit, it is required to wait until the shared communications channel becomes idle and then it is required to wait an additional period of time. A station is required to wait a DIFS period plus a random backoff period while a central controller is required to wait a PIFS period. The shorter waiting period required for a central controller grants a preference to the central controller, allowing it an opportunity to obtain access to the shared communications channel before a station does.

In practice, there are no fixed boundaries (other than physical impediments such as windows and walls) that limit how far a signal from a BSS will propagate and as a result, signals from one BSS tends to overlap signals from other BSSs. In IEEE 802.11, the overlap between BSSs can actually be used to permit a station to roam across multiple BSSs.

Referring now to Figure 3, a diagram illustrates an exemplary wireless LAN 300 made up of multiple, overlapping BSSs. The wireless LAN 300 is made up of three BSSs (310, 320 and 330). The first BSS is controlled by a hybrid coordinator (HC) 335 and has three wireless stations 340, 345, and 350. Wireless station 340 is also within range of the second BSS 320, while wireless station 350 is also within range of the third BSS 330. The second and the third BSSs 320 and 330 are controlled by HCs 355 and 365 respectively. The second BSS 320 further contains a wireless station 360, and the third BSS 330 further contains a wireless station 370.

The IEEE 802.11e March 2001 draft standard does not provide for a technique to support communications in the case where there are BSSs with overlapping coverage sharing a single communications channel. In place of a specially designed technique to support communications when there are BSSs with overlapping coverage areas sharing a common communications channel, an existing algorithm for contention communications is used.

According to the IEEE 802.11e March 2001draft standard, a hybrid coordinator (HC) in a BSS can begin a contention-free burst (CFB) or a contention-free period (CFP) for contention-free transfer on a shared communications channel if the channel has been idle for one PIFS period. Additionally, if a CFB or CFP was interrupted as a result of an inferred collision, the HC must wait one PIFS idle period before re-initiating the CFB or CFP. An inferred collision is a collision that was not actually detected, but assumed to have taken place due to the absence of an expected acknowledgment transmission or an expected data transmission. Waiting for a PIFS period, a fixed interval of time, to initiate or reinitiate a CFB or CFP may lead to repeated collisions between the HCs of adjacent BSSs. There is also no specified backoff procedure nor is there a maximum length limit to the duration of a CFB. The lack of a backoff procedure and a maximum CFB duration places severe limits on a BSS's ability to coexist with other BSSs.

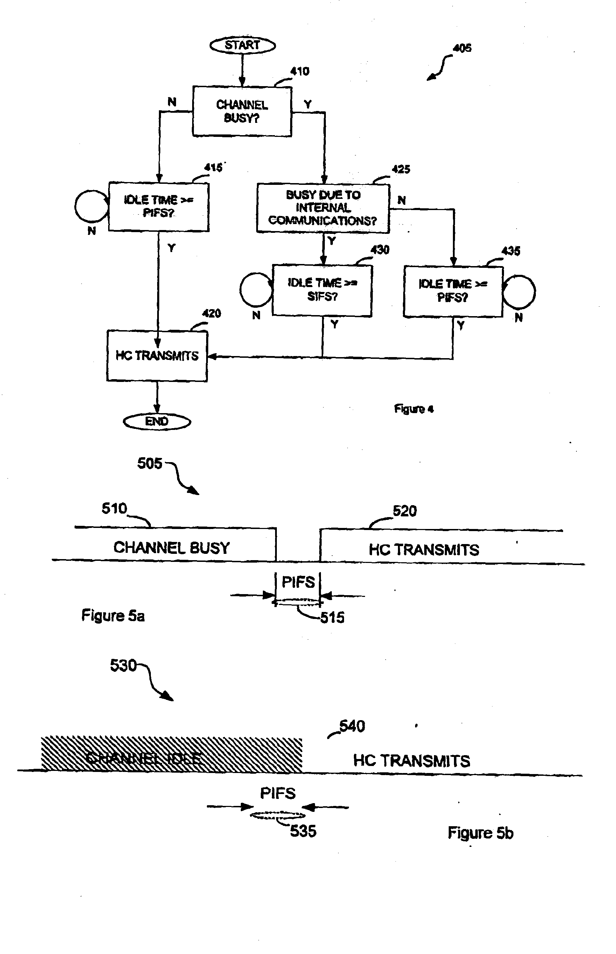

Referring now to Figure 4, a flow diagram illustrates an algorithm 405 for contention access of a shared communications channel in an operating environment where multiple BSSs have overlapping coverage areas and uses a common frequency band according to a preferred embodiment of the present invention. The algorithm 405 executes in an HC of a BSS. According to a preferred embodiment of the present invention, each HC would be executing a copy of the algorithm 405.

The algorithm 405 starts execution when the HC desires to start a CFB or CFP in which the HC transmits data or polls stations within the same BSS, one at a time, for data transmissions from those stations. If the HC does not need to start a CFB or CFP, then the algorithm 405 is not executing. When the HC has frames to transmit, it must first detect the status of the shared communications channel (410). The shared communications channel is either busy (used by some other HC or station) or idle. If the shared communications channel is idle, then the HC determines how long the channel has been idle (415). If the channel has been idle for less than one PIFS period, the algorithm 405 will force the HC to wait until the channel has been idle for one PIFS period. If the channel has been idle for a period equal to or greater than one PIFS period, the algorithm 405 allows the HC to transmit (420).

If the shared communications channel had been busy (410), the HC will determine if the channel is busy due to a contention-based transmission from a station within its own BSS or from some other BSS (425). The HC can determine the source of the transmission by listening in on the transmission. In fact, since the network uses a shared communications medium, all stations are required to listen in on transmissions to detect transmissions intended for them.

In either case, the algorithm 405 will force the HC to wait until the shared communications channel becomes idle. However, if the channel had been busy due to transmissions from a station within the same BSS, the HC will only need to wait for the channel to become idle for a time equal to a SIFS period (430) after the end of an acknowledgment frame. If the shared communications channel had been busy due to transmissions from some other BSS, then the HC will need to wait for the channel to become idle for a time equal to a PIFS period (435). Once the shared communications channel becomes idle and the HC has waited for the requisite amount of time (either a PIFS or a SIFS), then the HC is permitted to transmit. When the HC completes transmitting, the algorithm 405 terminates.

According to a preferred embodiment of the present invention, the HC is permitted to maintain a CFB up to a maximum prespecified amount of time. If the HC has more data to transmit, or finds some other stations in the BSS that has more data to transmit by contention-free transfer, than the maximum prespecified amount of time allows for, then the HC must give up the shared communications channel and attempt to reacquire the channel at a later time to start another CFB. If the HC does not need to continue the CFB up to the maximum prespecified amount of time, then the HC will give up the shared communications channel after it finishes transmitting or the last polled station finishes transmitting and receiving acknowledgment if such an acknowledgment is required.

Referring now to Figures 5a-c, timing diagrams illustrate the state of a shared communications channel in an environment where multiple BSSs have overlapping coverage areas, operate on a common frequency band, and use the algorithm for initiating a CFB or CFP to provide contention-free traffic transfers as described in Figure 4 according to a preferred embodiment of the present invention. Figures 5a-c display the status (idle or busy) of the shared communications channel as a function of time as an HC attempts to transmit a frame to start a CFB or CFP for contention-free data transfers within the BSS.

Referring now to Figure 5a, a timing diagram 505 illustrates the operation of the algorithm for initiating a CFB or CFP by an HC when the shared communications channel is busy according to a preferred embodiment of the present invention. The timing diagram 505 displays that the shared communications channel is busy 510 for a period of time and then becomes idle. During the time that the shared communications channel is busy 510, an HC wishes to transmit a frame to start a CFB or CFP. But, since the shared communications channel is busy, the HC must wait.

The HC, by listening in on the transmission, knows that the transmission is between a pair of stations from a different BSS than the one it resides in. Once the shared communications channel becomes idle, the HC must wait for a PIFS period 515 before it can begin transmitting. After the shared communications channel is idle for a PIFS period 515, the HC can begin transmitting 520.

Referring now to Figure 5b, a timing diagram 530 illustrates the operation of the algorithm for initiating a CFB or CFP by an HC when the shared communications channel is idle according to a preferred embodiment of the present invention. The timing diagram 530 displays that the shared communications channel is in the idle state. While the shared communications channel is idle, an HC wishes to transmit a frame to start a CFB or CFP. In order for the HC to transmit, the HC must verify that the shared communications channel has been idle for one PIFS period. Once the HC has been able to verify that the shared communications channel has been idle for one PIFS period, then the HC is free to transmit, displayed as segment 540.

Referring now to Figure 5c, a timing diagram 560 illustrates the operation of the algorithm for initiating a CFB or CFP by an HC when the shared communications channel is busy from transmissions between a pair of stations from the same BSS as an HC wishes to transmit a frame to start a CFB or CFP according to a preferred embodiment of the present invention. The timing diagram 560 displays that the shared communications channel is busy 565 for a period of time and then becomes idle. During the time that the shared communications channel is busy 565, an HC wishes to transmit a frame to start a CFB or CFP. But, since the shared communications channel is busy, the HC must wait.

However, since the shared communications channel is busy due to communications originating from the same BSS as the HC, the HC is not required to wait a PIFS period after the communications has ended prior to initiating its own transmission. Because the communications originates from the same BSS as the HC, the HC may wait only a SIFS period after the communications has ended prior to transmitting.

When there are multiple BSSs operating in adjacent geographical areas but sharing the same communications channel(s), collisions can and do occur. When collisions occur or expected transmissions are not received, an access recovery method is required to help the individual BSSs recover and prevent network performance from rapidly deteriorating due to uncontrolled and unmanaged transmissions in an attempt to recover from the collisions.

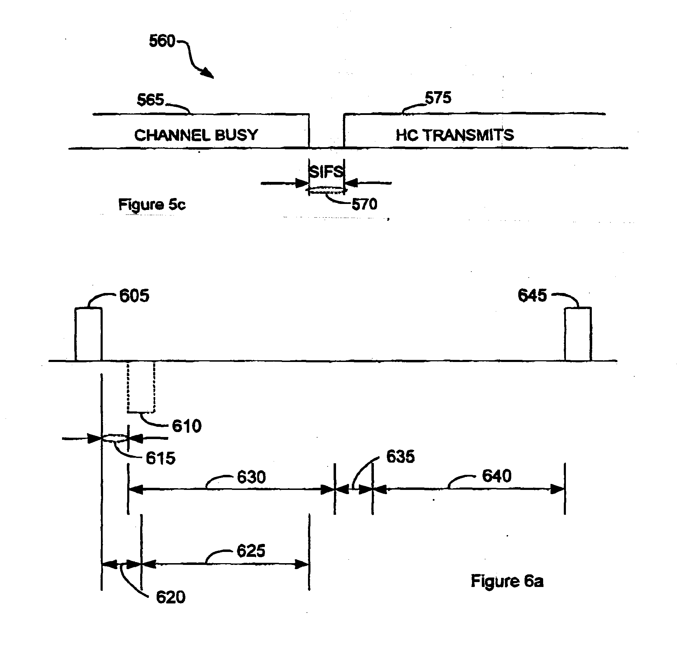

Referring now to Figure 6a, a timing diagram illustrates the state of a shared communications channel and the operation of an access recovery method when the shared communications channel is found busy for a period less than a transmission opportunity (TXOP) granted to a wireless station by an HC according to a preferred embodiment of the present invention. An HC initiates a frame exchange sequence by transmitting a frame 605 to a wireless station. It is expected that the wireless station sends a response 610 (i.e., an acknowledgment or data frame) to either the HC or another wireless station within one SIFS period 615 after the end of the frame 605 sent by the HC. When the HC does not correctly receive the response frame 610 (displayed as a dotted box), but rather finds that the shared communications channel has become busy 625 within one PIFS period 620 after it has transmitted frame 605, the HC infers that a collision has taken place. Note that if a collision had not taken place, the HC would have been able to listen in on the shared communications channel and correctly receive the response frame 610.

In the frame 605 transmitted to the wireless station, the HC granted the wireless station a TXOP 630 of a specific duration specified in a TXOP field. If the frame 605 did not specify a TXOP, then the TXOP is assumed to be equal to a period of time equal to the amount of time required to transmit an acknowledgment frame.

Even though the HC did not successfully receive the response frame 610 from the wireless station, the possibility that the wireless station actually receiving the frame 605 and acting upon the TXOP granted in frame 605 by a response may occur, since the HC did detect the channel to be busy. The transmission of the response frame 610 may simply have been corrupted. Several possible scenarios exist that may have prevented the HC from successfully receiving the response frame 610 but detecting the presence of a transmission.

One possible scenario involves a transmission from some other BSS arriving at the HC at the same time as the transmission of the response frame 610 arrives at the HC. The two transmissions interfere with one another and the HC is not able to receive the response frame 610 correctly. Another possible scenario involves the wireless station receiving the frame 605 from the HC and using the granted TXOP to transmit frames to a second wireless station. However, if the second wireless station is close to the transmitting wireless station, then the frames transmitted by the transmitting wireless station might have been transmitted at a low signal power. The low signal power may have been too low for the HC to accurately decode information from the transmission.

Therefore, the HC attempts to minimize future collisions by waiting until the granted TXOP 630 expires before it attempts to regain control of the shared communications channel. Upon expiration of the TXOP 630 and if the shared communications channel becomes idle, the HC waits a PIFS period 635 plus a random backoff period 640 prior to transmitting again. According to a preferred embodiment of the present invention, the backoff period is generated in a fashion similar to the random backoff period generated by wireless stations using distributed contention access during a contention period, i.e., by using a contention window to draw a random backoff. The contention window [0, CWHC), which includes 0 but excludes CWHC, starts with CWHC = CWHCmin + 1 for a new access recovery, continues with CWHC doubling its size for a successive access recovery following yet another failed recovery, but will not exceed a maximum size of CWHC = CWHCmax + 1. Note that even if the random backoff time was selected to being zero, there remains a delay that is attributable to computational and/or processing delay associated with the execution of the access recovery method. According to another preferred embodiment of the present invention, the maximum size CWHCmax has a default value that is equal to CWHCmin, which in turn has a default value of three. Both CWHCmin and CWHCmax are management information base (MIB) parameters whose values are set by the designers of the HC.

After the HC has waited the PIFS period 635 and the backoff period 640, the HC is free to regain control of the shared communications channel and send a frame 645 to start a new CFB. The HC may attempt to repeat the previous frame exchange or it may chose to perform a frame exchange with a different wireless station.

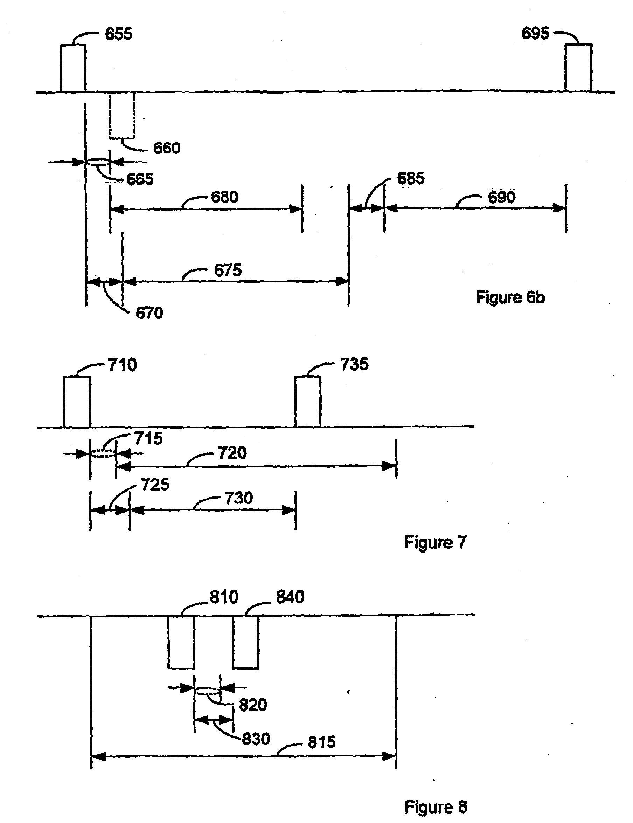

Referring now to Figure 6b, a timing diagram illustrates the state of a shared communications channel and the operation of an access recovery method when the shared communications channel is found busy for a period greater than a TXOP granted to a wireless station by an HC according to a preferred embodiment of the present invention. The diagram in Figure 6b displays the alternative case to the case displayed in Figure 6a. In Figure 6b, the shared communications channel remains busy 675 after a TXOP 680 granted by the HC to a wireless station by frame 655 expires. Once again, the HC attempts to reduce future collisions by waiting until the shared communications channel becomes idle (rather than waiting for the expiration of the transmission opportunity) before attempting to regain control of the shared communications channel. After the shared communications channel becomes idle, the HC then waits for a PIFS idle period 685 and a random backoff period 690 to start a new CFB by sending a frame 695. The random backoff period is generated the same way as described in Figure 6a.

Referring now to Figure 7, a timing diagram illustrates the state of a shared communications channel and the operation of an access recovery method when the shared communications channel is found to be idle after a TXOP is granted to a wireless station by an HC according to a preferred embodiment of the present invention. Figures 6a and 6b illustrate the cases when an HC grants a TXOP to a wireless station but does not correctly receive a response from the wireless station and yet detects the presence of a transmission corresponding to the granted TXOP. Figure 7 displays a case when the HC grants a TXOP to a wireless station but does not correctly receive a response from the wireless station nor can it detect the presence of a transmission corresponding to the granted TXOP.

If the shared communications channel remains idle after a SIFS period 715 after the HC sends a frame 710 to the wireless station and requires a response (a data frame, an acknowledgment frame, or a combination) within a SIFS period of its transmission, then the HC assumes that the frame 710 was corrupted during the transmission process. One possible scenario involves the arrival of another frame from some other BSS arriving at the wireless station at the same time as frame 710 arrives at the wireless station. The frames interfere and the wireless station is not able to decode the information in frame 710 and hence does not respond.

Since the HC has concluded that a transmission opportunity 720 granted in frame 710 has been lost due to the corruption of the transmission itself, the HC immediately attempts to regain control of the shared communications channel. As discussed above, the HC waits for a PIFS period 725 plus a random backoff period 730. After the end of the backoff period 730, the HC regains control of the shared communications channel and initiates a new CFB by transmitting frame 735.

Collisions of frames are not limited to frames originating from an HC. Frames from wireless stations are just as likely to have collisions as frames from HCs. In fact, the scenarios detailed in Figures 6a and 6b are likely the result of a frame from a wireless station being damaged during transmissions.

Referring now to Figure 8, a timing diagram illustrates the state of a shared communications channel and the operation of an access recovery method when the shared communications channel is found to be idle after a frame, which requires a response (such as an acknowledgment), is transmitted by a wireless station according to a preferred embodiment of the present invention. A first wireless station transmits a frame 810 to a second wireless station (or an HC) during a TXOP 815 granted it by the HC responsible for the BSS that the wireless station is located in. However, the first wireless station does not receive an expected response within on SIFS period 820 after the transmission of frame 810.

The first wireless station will wait for one entire PIFS period 830 to expire and then reclaims the shared communications channel by transmitting another frame 840 if there is sufficient time remaining in the first wireless station's TXOP 815. If the first wireless station does not transmit in the remaining TXOP, the HC may claim the channel at the end of the TXOP by transmitting a frame (not shown).

There are several possible scenarios that may explain the first wireless station not receiving the expected response. A first scenario involves the first wireless station sending the frame 810 to a second wireless station (or HC) and the second wireless station does indeed respond to frame 810. However, a simultaneous transmission, near the first wireless station, from another BSS damages the response frame from the second wireless station. A second scenario involves the first wireless station sending the frame 810 to a second wireless station (or HC) and a simultaneous transmission, near the second wireless station (or HC), from another BSS damages the frame 810, and therefore the second wireless station does not actually receive the frame 810 and hence does not respond.

When multiple BSSs share a common communications channel, limits must be placed on an amount of time that a single HC (or wireless station) may control the shared communications channel. If the single HC (or wireless station) was granted control of the shared communications channel for an arbitrary amount of time, then it might prevent other HCs (or wireless stations) from obtaining access of the shared communications channel, i.e., the other HCs (or wireless stations) may be starved-out. As currently specified in the IEEE 802.11e March 2001 draft standard, there is no limit to the duration of a CFB nor is there any specified techniques to facilitate sharing a common communications channel between multiple BSSs. The only current limit on the size of a CFB is the size of the contention period or the contention-free period, depending on which period the HC wishes to initiate a CFB.

According to a preferred embodiment of the present invention, a limit on the duration of a CFB is set at a value of aMaxCFBLimit. The parameter aMaxCFBLimit is a management information base (MIB) attribute that is specified by designers of the HC. A typical value for aMaxCFBLimit would be such that more than one CFB can fit within a single contention period or contention-free period. Additionally, should an HC and wireless stations in the same BSS have more contention-free transmissions than can fit within a single CFB, the HC must perform a backoff procedure one PIFS period after the end of its previous CFB to regain control of the shared communications channel. The wait and backoff procedure allows other HCs (or wireless stations) an opportunity to obtain access of the shared communications channel.

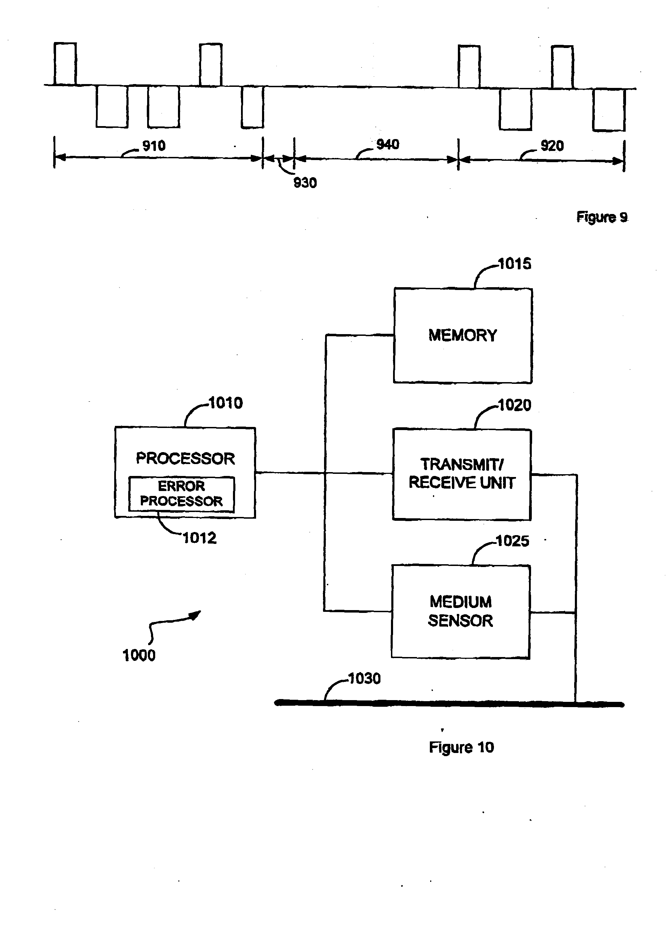

Referring now to Figure 9, a timing diagram illustrates the state of a shared communications channel shared by multiple BSS according to a preferred embodiment of the present invention. The timing diagram displays a series of frame transmission from an HC (blocks above the horizontal line) and from wireless stations (blocks below the horizontal line) grouped together in a first interval 910 and a second interval 920, respectively. The first interval 910 represents a CFB from one HC of one BSS that is sharing the communications channel. The second interval 920 represents a second CFB originating from the same HC or another HC.

The CFB from the HC ends when the HC completes its necessary communications or when the CFB has reached a maximum duration as specified by aMaxCFBLimit. As discussed previously, should the HC wish to regain control of the shared communications channel after its CFB expires, it must wait a PIFS period 930 and a random backoff period 940 before it can regain control of the shared communications channel and begin a new CFB 920.

The random backoff period is an interval randomly chosen from a contention window (a range) of [0, CWHC), which includes 0 but excludes CWHC, where CWHC = CWHCmin + 1, with the default value of CWHCmin equal to three. The actual backoff procedure is similar to the backoff procedure for a station using distributed contention to access a communications medium during a contention period. The HC performing the backoff procedure randomly selects a backoff period from the above specified contention window and places the backoff period into a backoff counter. The backoff counter decrements one value for each time slot that passes and the shared communications channel is idle. When the backoff counter reaches zero, the HC transmits.

If a collision should take place, then like the normal distributed contention backoff procedure, the HC involved in the collision repeats backoff procedure with a new backoff period randomly selected from the contention window of [0, CWHC), where CWHC is equal to the minimum of CWHCmax plus one or twice the previous CW. The backoff procedure is repeated for each subsequent collision. A maximum size limit has been placed on the size of the contention window. The contention window cannot be larger than [0, CWHCmax], a range which includes both 0 and CWHCmax. According to a preferred embodiment of the present invention, the default value of CWHCmax is equal to CWHCmin, while the default value of CWHCmin is three time slots. Both CWHCmin and CWHCmax are MIB parameters.

Referring back to Figure 9, during the time when the HC spends performing the backoff procedure (displayed as span 940), another HC desiring to transmit will detect that the shared communications channel is idle and the other HC will begin its own CFB. When the first HC detects that the shared communications channel is no longer idle, it suspends the backoff procedure and will wait until the shared communications channel becomes idle again to resume the backoff procedure.

Referring now to Figure 10, a block diagram illustrates a station 1000 with hardware support for access recovery and channel sharing according to a preferred embodiment of the present invention. According to a preferred embodiment of the present invention, the station 1000 may be an HC or a wireless station. The station 1000 has a processor 1010 that is responsible for controlling all communications, which includes but is not limited to: organizing data into frames for transmission, processing received frames, initiating CFBs, detecting the occurrence of errors, decoding transmissions carried on the shared communications channel, etc. The processor 1010 is coupled to a memory unit 1015 which can be used to store data to be transmitted or received.

Internal to the processor 1010 is an error processor 1012. The error processor 1012 is responsible for detecting the occurrence of errors due to collisions and transmissions that are not received and to initiate a recovery procedure to recover from the collision. For example, if an expected response from a receiving wireless station were not received nor detected by the HC, the error processor 1012 would note the lack of the expected response and notify the processor 1010 that an error has occurred and initiate an access recovery procedure. In another example, the error processor 1012 could note that the shared medium was busy after an expected response was not received correctly. Based on this particular set of circumstances, the error processor 1012 would initiate a different access recovery procedure.

Also coupled to the processor is a transmit and receive unit 1020, commonly referred to as a transceiver. The transmit and receive unit 1020 is responsible for transmitting and receiving frames. Also coupled to the processor 1010 is a medium sensor unit 1025. The medium sensor unit 1025 is responsible for detecting the state of a communications medium 1030, either idle or busy. Coupled to the transmit and receive unit 1020 and the medium sensor 1025 is the communications medium 1030.

According to a preferred embodiment of the present invention, the medium sensor unit 1025, once determining the state of the communications medium 1030, places a value into a register (not shown) inside the processor 1010. For example, if the communications medium 1030 is busy, then the medium sensor unit 1025 will place a certain value into the register. The medium sensor unit 1025 places a different value into the register if the communications medium 1030 is idle. According to another preferred embodiment of the present invention, the medium sensor unit 1025 asserts a medium status flag signal line (not shown) one way if the communications medium 1030 is idle and another way if it is busy.

According to another preferred embodiment of the present invention, the medium sensor unit 1025 is internal to the transmit and receive unit 1020. With the medium sensor unit 1025 inside the transmit and receive unit 1020, the medium sensor unit 1025 can make use of some of the hardware existing in the transmit and receive unit 1020 to determine the state of the communications medium 1030. For example, the medium sensor unit 1025 may use portions of the receiver hardware to detect the status (busy or idle) of the communications medium 1030.

The communications medium 1030 is shown in Figure 10 as being a physical, wired connection. However, according to a preferred embodiment of the present invention, the communications medium 1030 may be any medium that is capable of transmitting data. Examples of different possible communications medium include, but are not limited to: wire (power line, telephone line, twisted pair, coaxial cable, multi-conductor wire, etc.), fiber optics (single mode and multi-mode), wireless (radio frequency, infrared, microwave, laser light, etc.).

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A method for initiating a contention-free burst by a hybrid coordinator of a network using a shared communications medium comprising:
determining a status of the shared communications medium;
waiting for access to the shared communications medium based on the status of the shared communications medium; and
transmitting information after expiration of a specified period of time.

2. The method of claim 1, wherein when the status of the shared communications medium is idle, the waiting step comprises ensuring that the shared communications medium has been idle for at least a point coordination function inter-frame space (PIFS) period.

3. The method of claim 1, wherein when the status of the shared communications medium is busy due to a transmission, and in the waiting step comprises:
determining a source of the transmission;
waiting until the transmission completes; and
waiting for a specified period of time.

4. The method of claim 3, wherein the source of the transmission was determined to have originated from a same BSS, and wherein the specified period of time is equal to a short inter-frame space (SIFS) period.

5. The method of claim 3, wherein the source of the transmission was determined to have originated from a same BSS, and wherein the specified period of time is equal to a point coordination function inter-frame space (PIFS) period.

6. The method of claim 1, wherein the contention-free burst is of limited duration and the hybrid coordinator has more information to transmit than can be transmitted in the contention-free burst, the method further comprises:
(1) waiting a second specified time period after the completion of the contention-free burst;
(2) generating a backoff time;
(3) initiating a backoff procedure; and
(4) initiating a new contention-free burst when the backoff procedure completes.

7. The method of claim 6, wherein the second specified time period is a point coordination function inter-frame space (PIFS) period.

8. The method of claim 6, wherein the initiating step comprises:
inserting the backoff time into a backoff timer;
decrementing the backoff timer each time an idle slot expires; and
completing the backoff procedure when the backoff counter reaches zero.

9. The method of claim 6, wherein the method is repeated until the hybrid coordinator transmits all of its information.

10. The method of claim 6, wherein a second hybrid coordinator may take control of the shared medium by initiating a contention-free burst of its own while the hybrid coordinator is attempting to initiate a new contention-free burst.

11. The method of claim 10, wherein the second hybrid coordinator may initiate the contention-free burst after the shared medium has been idle for a PIFS period.

12. The method of claim 6, wherein the backoff time is randomly chosen from a contention window of [0, CWHC) ; and
wherein CWHC = CWHCmin + 1, and CWHCmin is a prespecified value.

13. The method of claim 12, wherein a collision occurs due to the initiating of the new contention-free burst, and wherein the method comprises an additional step of (5) repeating steps (1)-(4) with the backoff time being randomly chosen from a contention window of [0, 2*CWHC).

14. The method of claim 13, wherein the contention window is doubled each time the method repeats due to a collision resulting from the initiating of the new contention-free burst.

15. The method of claim 14, wherein the contention window has a maximum size of [0, CWHCmax + 1); and
wherein CWHCmax is a prespecified value.

16. The method of claim 15, wherein a default value of CWHCmax is equal to CWHCmin and CWHCmin is defaulted to three time slots.

17. A method for access recovery in a shared medium comprising:
transmitting a frame to a destination to initiate a contention-burst;
waiting for an expected response from the destination within a first time period;
if the expected response from the destination does not arrive within the specified time period, then:
sensing a status of the shared medium;
waiting a second time period; and
regaining control of the shared medium.

18. The method of claim 17, wherein the first period of time is a point coordinator function inter-frame space (PIFS) period.

19. The method of claim 17, wherein the second time period is equal to a third time period plus a backoff time.

20. The method of claim 17, wherein a wireless station is in control of the shared medium, and wherein the status of the shared medium is idle, and wherein the specified time period is equal to one short inter-frame space (SIFS) period.

21. The method of claim 20, wherein the wireless station will regain control of the shared medium by transmitting a second frame one time slot after waiting the first specified period of time after the end of the first transmission, only if sufficient time remains in a transmission opportunity granted to the wireless station to transmit the second frame plus receive an acknowledgment corresponding to the second frame.

22. The method of claim 20, wherein a hybrid coordinator may regain control of the shared medium one PIFS period after a transmission opportunity granted to the wireless station expires.

23. The method of claim 17, wherein a hybrid coordinator is in control of the shared medium, and wherein the status of the shared medium is idle, and wherein the waiting a second time period step comprises initiating a random backoff procedure.

24. The method of claim 23, wherein the initiating step comprises:
generating a backoff period;
loading a backoff counter with the backoff period;
decrementing the backoff counter each time an idle slot expires; and
completing the backoff procedure when the backoff counter reaches zero.

25. The method of claim 24, wherein the backoff period is a value randomly selected from a contention window.

26. The method of claim 25, wherein the contention window is of size [0, CWHC), wherein 0 is included and CWHC is excluded, wherein CWHC is equal to CWHCmin plus one, and wherein CWHCmin is a prespecified value.

27. The method of claim 26, wherein the contention window doubles in size each time another backoff period is selected following a failed access recovery.

28. The method of claim 27, wherein a maximum contention window size is fixed at [0, CWHCmax + 1), wherein CWHCmax is a prespecified value.

29. The method of claim 28, wherein a default value of CWHCmax is equal to CWHCmin, and wherein a default value of CWHCmin is equal to three time slots.

30. The method of claim 17, wherein a hybrid controller is in control of the shared medium, and the status of the shared medium is busy, and wherein the waiting a second time period step comprises:
waiting a period of time, wherein the period of time is equal to a sum of a point coordinator function inter-frame space (PIFS) period plus the larger of a time while the shared medium is busy or a transmission opportunity specified in the frame; and
initiating a backoff procedure.

31. The method of claim 30, wherein the initiating step comprises:
generating a backoff period;
loading a backoff counter with the backoff period;
decrementing the backoff counter each time an idle slot expires; and
completing the backoff procedure when the backoff counter reaches zero.

32. The method of claim 17, wherein the regaining step comprises transmitting a second frame to a second destination station initiating a new contention free burst.

33. The method of claim 32, wherein the second destination is the same as the first destination station.

34. The method of claim 32, wherein the second destination is different from the first destination station.

35. A circuit comprising:
a processor coupled to a memory, the processor containing circuitry to manage communications in a shared medium, the processor further comprises an error processor to detect and recover from transmissions damaged by collisions from other transmissions;
a transmit/receive unit coupled to the processor, the transmit/receive unit to transmit and receive data frames from the shared medium; and
a medium sensor unit coupled to the processors, the medium sensor to detect a state of the shared medium.

36. The circuit of claim 35, wherein the medium sensor unit is internal to the transmit/receive unit.

37. The circuit of claim 35, wherein the medium sensor unit asserts a medium status signal flag depending on the state of the shared medium.

38. The circuit of claim 35, wherein the error processor determines when the circuit can safely reclaim control of the shared medium.

39. The circuit of claim 35, wherein the error processor determines an occurrence of errors and a nature of the errors based on the status of the shared medium and contents of transmissions on the shared medium.

40. A communications system comprising:
a shared medium;
at least two communications stations, coupled to the shared medium, each communications station comprising:
a processor coupled to a memory, the processor containing circuitry to manage communications in a shared medium, the processor further comprises an error processor to detect and recover from transmissions damaged by collisions from other transmissions;
a transmit/receive unit coupled to the processor, the transmit/receive unit to transmit and receive data frames from the shared medium; and
a medium sensor unit coupled to the processors, the medium sensor to detect a state of the shared medium.

41. The communications system of claim 40, wherein the communications system further comprises a hybrid coordinator coupled to the shared medium, the hybrid coordinator further comprising:
a processor coupled to a memory, the processor containing circuitry to manage communications in a shared medium, the processor further comprises an error processor to detect and recover from transmissions damaged by collisions from other transmissions;
a transmit/receive unit coupled to the processor, the transmit/receive unit to transmit data frames to, and receive data frames from, the shared medium; and
a medium sensor unit coupled to the processors, the medium sensor to detect a state of the shared medium.
